# EUROPEAN PATENT APPLICATION

(11) **EP 4 383 417 A2**
(43) Date of publication of application: **12.06.2024**
(21) Application number: 23213616.8
(22) Date of filing: 01.12.2023
(51) Int. Cl.: H01M 50/211, H01M 50/247, H01M 50/284, H01M 50/529, H01M 50/519, H01M 50/502, H01M 50/553, H01M 50/583

(54) **BATTERY PACK**

(30) Priority: 06.12.2022 US 202263430602 P
(71) Applicant: Milwaukee Electric Tool Corporation, Brookfield, WI 53005 (US)
(72) Inventor: MEYER, Zachery, Hartland, 53029 (US); SCHMELING, Thomas A., Wauwatosa, 53222 (US); SILHA, Wyatt R., Milwaukee, 53210 (US); ZIDEL, Eli M., Milwaukee, 53211 (US)
(74) Representative: Forresters IP LLP

(57) **Abstract**

A battery pack includes a control circuit board, a first cell, a second cell, a fuse, and a strap. The first cell has a first terminal electrically coupled to the control circuit board. The second cell is electrically coupled to the first cell and has a second terminal. The fuse electrically couples the second terminal to the control circuit board. The fuse is positioned between the second terminal and the control circuit board. The strap is electrically insulative and molded to the fuse. The strap electrically isolates the fuse from the first cell.

## Description

### CROSS-REFERENCE TO RELATED APPLICATIONS

The present application claims priority to U.S. provisional application number 63/430,602, filed December 6, 2022, the entire contents of which are incorporated by reference herein.

### FIELD

The present disclosure relates to battery packs, and more particularly to pouch cell battery packs.

### SUMMARY

In one independent aspect, a battery pack includes a control circuit board, a first cell, a second cell, a fuse, and a strap. The first cell has a first terminal electrically coupled to the control circuit board. The second cell is electrically coupled to the first cell, and has a second terminal. The fuse electrically couples the second terminal to the control circuit board. The fuse is positioned between the second terminal and the control circuit board. The strap is electrically insulative and molded to the fuse. The strap electrically isolates the fuse from the first cell.

In another independent aspect, a battery pack includes a control circuit board, a cell, another cell, a tap, a wall, and a trace. The cell electrically coupled to the control circuit board and having a first terminal. The other cell has a second terminal electrically coupled to the first terminal at an interface. The tap is electrically coupled to the first terminal and the second terminal at the interface. The wall is electrically insulative and insert to the tap. The wall secures the position of the tap. The trace electrically couples the tap to the control circuit board. The trace is configured to transmit a signal indicative of at least one of a voltage and a current at the interface to the control circuit board.

In another independent aspect, a battery pack includes a first cell, a second cell, a third cell, a core box, and a wall coupled to the core box. The first cell has a first terminal. The second cell has a second terminal directly electrically coupled to the first cell at an interface. The third cell has a third terminal. The core box receives the first cell, the second cell, and the third cell therein. The wall includes a first terminal hole through which the first terminal extends, a second terminal hole through which the second terminal extends, and a third terminal hole through which the third terminal extends. The wall further includes an electrically insulative rib protruding from the wall to inhibit contact and thus electrical short circuiting between between the third terminal and either of the first terminal and the second terminal. The rib electrically isolates the third terminal from the first terminal and the second terminal.

The present disclosure provides, in another aspect, a battery pack comprising:
a control circuit board;
a first cell having a first terminal electrically coupled to the control circuit board;
a second cell electrically coupled to the first cell and having a second terminal;
a fuse electrically coupling the second terminal to the control circuit board, the fuse being positioned between the second terminal and the control circuit board;
an electrically insulative strap molded to the fuse, the strap electrically isolates the fuse from the first cell.

The fuse may have a cell-side portion having a first width, a board-side portion having a second width, and a central portion between the cell-side portion and the board-side portion having a third width smaller than the first width and the second width.

The fuse may have an encapsulated portion surrounded by the strap and a free portion not encapsulated by the strap.

The second terminal may be coupled to the fuse at the free portion.

The fuse may have a cell-side portion, a board-side portion, and a central portion between the cell-side portion and the board-side portion, the central portion being part of the free portion of the fuse spaced from the strap.

The battery pack may further comprise a core box having a wall with a receptacle, the receptacle receiving a tab of the strap to align the strap with the wall.

The battery pack may further comprise a third cell with a third terminal, the third cell being electrically coupled with the first cell and the second cell, the third terminal being electrically isolated from the second terminal by the strap.

The present disclosure provides, in another aspect, a battery pack comprising:
a control circuit board;
a cell electrically coupled to the control circuit board and having a first terminal;
another cell having a second terminal electrically coupled to the first terminal at an interface;
a tap electrically coupled to the first terminal and the second terminal at the interface;
an electrically insulative wall molded to the tap, the wall secures the position of the tap; and
a trace electrically coupling the tap to the control circuit board, the trace being configured to transmit a signal indicative of at least one of a voltage and a current at the interface to the control circuit board.

The tap, first terminal, and second terminal may be welded to one another at the interface.

The tap may be soldered to the trace.

The battery pack may further comprise yet another cell having a yet another terminal, a further cell having a further terminal, and a another tap electrically coupled to the yet another terminal and the further terminal at a second interface, the second tap being electrically coupled to the second trace, both the trace and the second trace being provided within a jacket.

At least one of the first terminal and the second terminal may be either copper-based or aluminum-based.

The first terminal may be copper-based, and the second terminal may be aluminum-based.

The tap may have an encapsulated portion surrounded by the wall and a free portion not encapsulated by the wall, the free portion may be positioned between the wall and the first terminal, and the first terminal may be positioned between the tap and the second terminal.

The present disclosure provides, in another aspect, a battery pack comprising:
a first cell having a first terminal;
a second cell having a second terminal directly electrically coupled to the first cell at an interface;
a third cell having a third terminal;
a core box receiving the first cell, the second cell, and the third cell therein;
a wall coupled to the core box, the wall comprising:
   a first terminal hole through which the first terminal extends,
   a second terminal hole through which the second terminal extends,
   a third terminal hole through which the third terminal extends, and
   an electrically insulative rib protruding from the wall to inhibit contact and thus electrical short circuiting between the third terminal and either of the first terminal and the second terminal, the rib electrically isolates the third terminal from the first terminal and the second terminal.

The wall may be generally planar and has a first thickness.

The rib may have a second thickness greater than the first thickness.

The second cell may have an auxiliary second cell terminal, the third cell has an auxiliary third cell terminal, and the third terminal may be indirectly coupled to the first cell and the second cell through an auxiliary interface between the auxiliary second cell terminal and the auxiliary third cell terminal.

The wall may be molded, and the rib may be integrally formed with the wall.

The rib may be positioned between the first terminal hole and the second terminal hole.

Other aspects of the disclosure will become apparent by consideration of the detailed description and accompanying drawings.

### BRIEF DESCRIPTION OF THE DRAWINGS

FIG. 1 is a perspective view of a battery pack according to embodiments disclosed herein.
FIG. 2 is an exploded view of the battery pack of FIG. 1.
FIG. 3 is a perspective view of a wall of the battery pack of FIG. 1.
FIG. 4 is another perspective view of the wall of FIG. 3.
FIG. 5 is a partial perspective view of the battery pack of FIG. 1.
FIG. 6 is another partial perspective view of the battery pack of FIG. 1.
FIG. 7 is a cross-sectional view of the battery pack of FIG. 1 taken along section line 7-7 in FIG. 5.
FIG. 8 is another partial perspective view of the battery pack of FIG. 1.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

### DETAILED DESCRIPTION

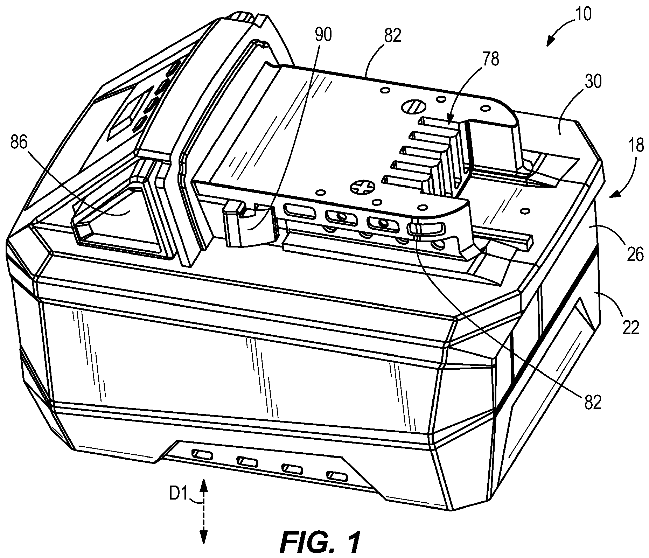

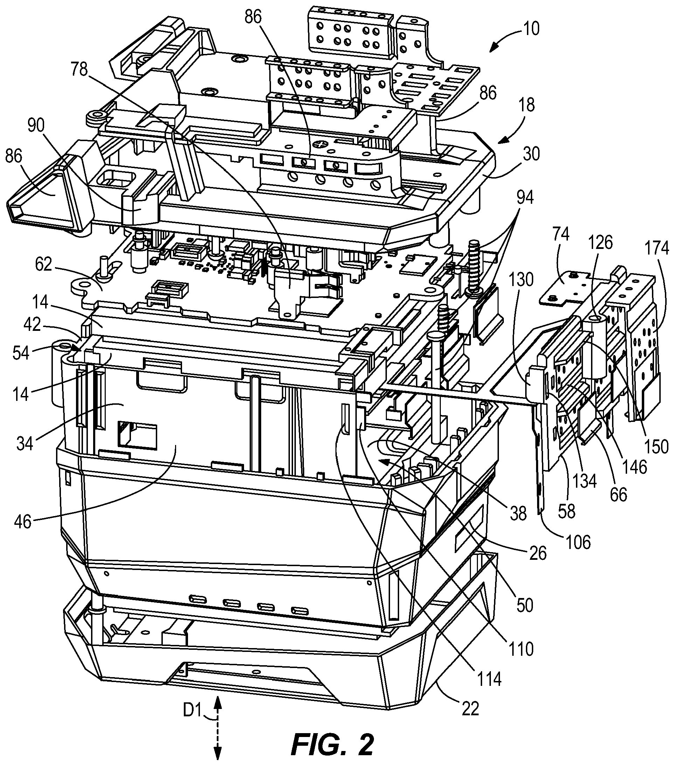

FIGS. 1-7 illustrate a battery pack 10 including a plurality of cells 14 (e.g., pouch cells) positioned within a housing 18. With reference to FIG. 2, the housing 18 includes a base 22, a body 26, and a cap 30. The battery pack 10 further includes a core box 34 positioned within the housing 18. The pouch cells 14 are generally located within the core box 34. The core box 34 is generally rectangular in shape, and includes a base wall 38, an end wall 42, a plurality of sidewalls 46. The end wall 42 and the sidewalls 46 project away from the base wall 38. Opposite the end wall 42, the core box 34 includes an end void 50. Opposite the base wall 38, the core box 34 includes a ceiling void 54. In the assembled battery pack 10, a wall 58 takes up the end void 50, and a printed circuit board 62 takes up the ceiling void 58. Various mechanisms relating to the wall 58, components provided on and around the wall 58, and electrical isolation and couplings provided adjacent the wall 58 are described herein. These mechanisms securely and safely mechanically and electrically couple the cells 14 to one another and the cells 14 to the printed circuit board 62.

In the illustrated embodiment, the battery pack 10 is a high-performance battery pack including a plurality of lithium-based cells 14. The illustrated battery pack 10 includes a plurality of lithium-based pouch cells 14. Other battery packs may be nickel-based or have differing chemistries and/or structures (e.g., other battery packs may include prismatic cells or cylindrical cells). The illustrated cells 14 are stacked upon one another in the core box 34 and along a stacking direction D1 between the base wall 38 and the printed circuit board 62. Each cell 14 has a cell terminal 66 corresponding to each polarity (e.g., positive, negative) of the cell 14. The illustrated embodiment includes five cells 14 coupled in series. Each cell 14 of the illustrated battery pack 10 has a voltage of approximately 3.6 volts, and the total voltage of the battery pack 10 is approximately 18 volts. Other electrical arrangements of cells 14, numbers of cells 14, voltages of individual cells 14, and/or the total voltage of the battery pack 10 may differ in other embodiments.

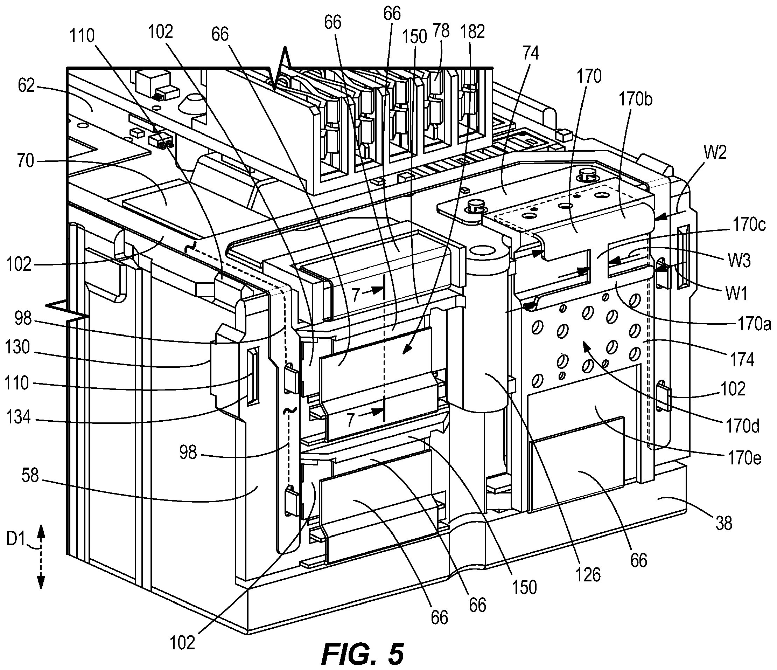

As shown in FIG. 5, the battery pack 10 includes a first lead 70 coupled to a cell terminal 66 of one of the cells 14 and a second lead 74 coupled to a cell terminal 66 of another one of the cells 14. The cells 14 are coupled to one another by terminal-to-terminal connections as described below. The first lead 70 and the second lead 74 are each mounted on the printed circuit board 62 and are each coupled to a battery terminal 78 for connection of the battery pack 10 to either a charger or a tool (not shown). The first lead 70 and the second lead 74 relate to opposite polarities (e.g., the first lead 70 corresponds with a positive charge, and the second lead 74 corresponds with a negative charge, or vice versa). Referring to FIGS. 1 and 2, the battery pack 10 includes a pair of rails 82 which are configured to slidably engage either a charger or a tool to electrically connect the battery terminals 78 of the battery pack 10 to the charger or tool. A button 86 and tang 90 are configured to hold engagement of the battery pack 10 and the charger or tool. To disconnect the battery pack 10 from the charger or tool, the button 86 is depressed to release the tang 90 from the charger or tool. A plurality of fasteners 94 engage the housing 18 and wall 58 hold the battery pack 10 together.

With reference to FIGS. 2 and 5, the battery pack 10 further includes a sensing circuit including a plurality of traces 98 connecting a plurality of taps 102 to the printed circuit board 62. The traces 98 are each positioned within a jacket 106. In the illustrated embodiment, the traces 98 and jacket 106 are formed as a flexible circuit capable of deflecting. However, in other embodiments, portions or the entirety of the traces 98 and/or the jacket 106 may be substantially rigid.

With continued reference to FIG. 2, the core box 34 includes a plurality of barbs 110 configured to interact with and secure the core box 34 to the printed circuit board 62 and the wall 58. The barbs 110 are generally located adjacent the ceiling void 54 and the end void 50. The core box 34 further includes barb receivers 114 which are also configured to interact with the wall 58.

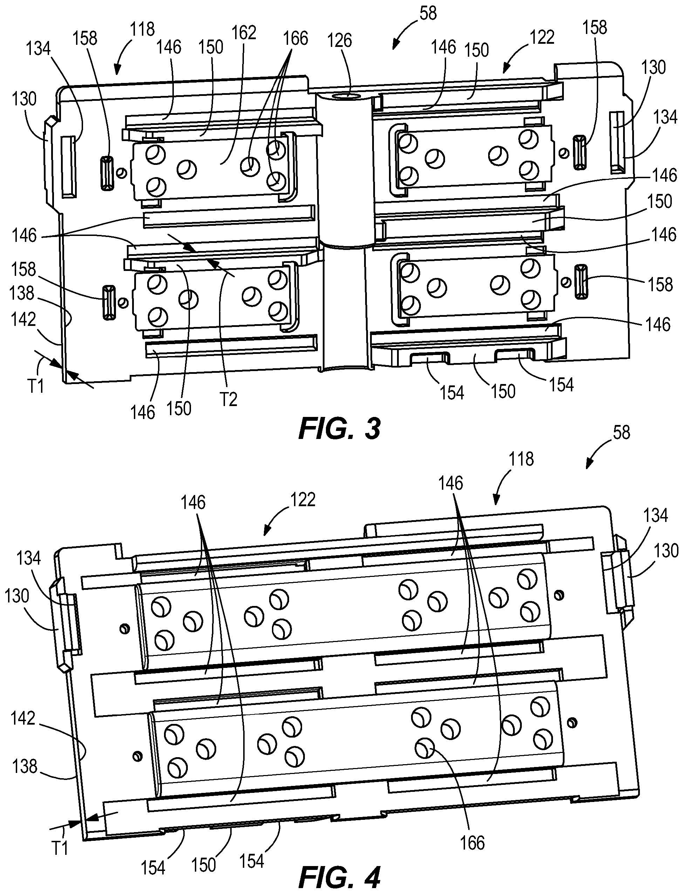

FIGS. 3 and 4 illustrate the wall 58 in detail. The wall 58 is generally split into a first lateral portion 118 (i.e., a left side) and a second lateral portion 122 (i.e., a right side). A fastener receiver 126 is positioned between the first lateral portion 118 and the second lateral portion 122. The fastener receiver 126 is configured to receive one of the fasteners 94 to secure the wall 58 to the housing 18. Each lateral portion 118, 122 of the wall 58 includes a barb 130 and a barb receiver 134 which each interface with corresponding barbs 110 and barb receivers 114 of the core box 34 to secure the wall 58 to the core box 34. The wall 58 is generally planar and has an outer surface 138 and inner surface 142 which are spaced from one another by a thickness T1.

Each lateral portion 118, 122 of the wall 58 includes a plurality of cell terminal holes 146. In the assembled battery pack 10, one cell terminal 66 of one cell 14 is positioned extending through one cell terminal hole 146. The wall 58 further includes a plurality of ribs 150 which project from the outer surface 138 of the wall 58. The ribs 150 project a second thickness T2 from the outer surface 138. Accordingly, a total thickness of the ribs 150 includes both the first thickness T1 and the second thickness T2 such that the rib has a second thickness (T1+T2) that is greater than the first thickness T1. The ribs 150 separate adjacent cell terminals 66 to inhibit contact between adjacent cell terminals and inhibit electrical short circuiting between certain combinations of terminals 66 (e.g., a first terminal of a first cell and a second terminal of a second cell). One of the ribs 150 includes a receptacle 154. In the illustrated embodiment, the rib 150 includes a pair of spaced apart receptacles 154. The wall 58 includes a plurality of tap holes 158 passing through the outer surface 138 but not projecting from the inner surface 142. The tap holes 158 are in communication with tap recesses 162. The tap recesses 162 are recess from the outer surface 138 of the wall 58. Tap through-holes 166 are located within the tap recesses 162 and span the entirety of the wall 58 from the outer surface 138 to the inner surface 142. In the illustrated embodiment, each tap recess 162 includes three tap through-holes 166 at one lateral side thereof, and three tap through-holes 166 at an opposite lateral side thereof for a total of six tap through-holes 166 per tap recess 162. The illustrated tap through-holes are arranged in opposing triangular pattern. Other numbers and/or arrangements of tap through-holes 166 are possible.

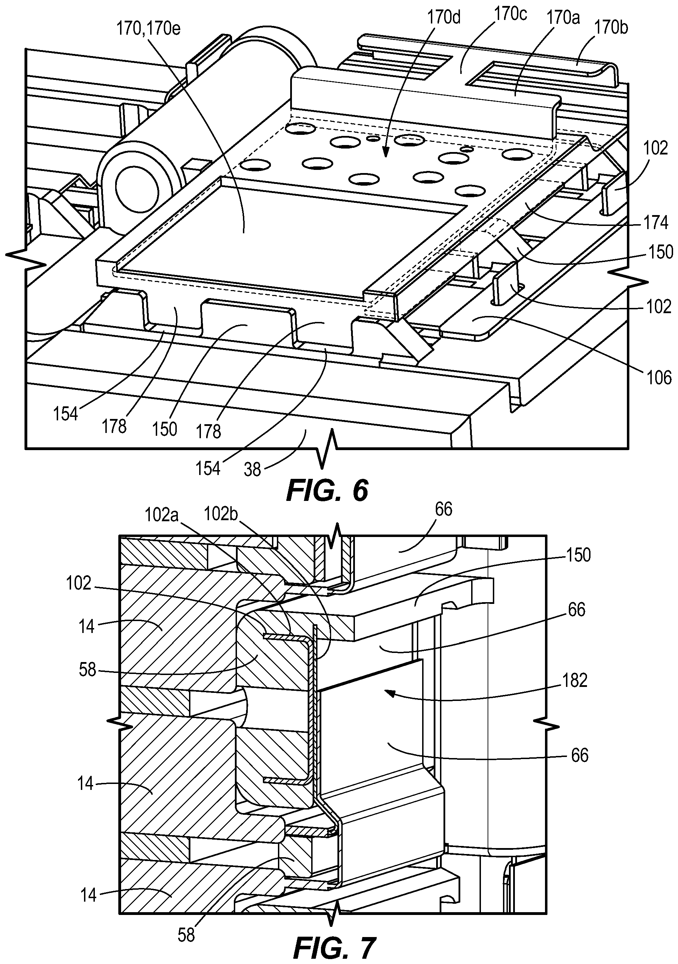

With reference to FIGS. 5 and 6, the battery pack 10 includes a fuse 170. The fuse 170 electrically couples a cell terminal 66 of a cell 14 to the printed circuit board 62. The fuse 170 is positioned between the cell terminal 66 and the printed circuit board 62 such that the fuse 170 can protect the printed circuit board 62 from damage (e.g., overheating, overvoltage, overcurrent) occurring at the cell terminal 66. The fuse 170 is electrically conductive. An electrically insulative strap 174 is insert molded to the fuse 170. The strap 174 is electrically isolates the fuse 170 from cells 14 and cell terminals 66 other than the connected cell 14 and cell terminal 66.

The fuse 170 has a cell-side 170a portion having a first width W1, a board-side portion 170b having a second width W2, and a central portion 170c between the cell-side portion 170a and the board side portion 170b. The central portion 170c has a third width W3 which is smaller than the first width W1 and the second width W2. In the illustrated embodiment, the first width W1 and the second width W2 are generally the same. The first width W1 and second width W2 permit the fuse 170 to be robust enough to withstand operating characteristics (e.g., heat, voltage, current), and the third width W3 is dimensioned such that the central portion of the fuse 170 ruptures with unsafe operating characteristics (e.g., overheating, overvoltage, overcurrent). Upon rupture, the fuse 170 does not permit passage of current from the connected cell terminal 66, and the charge or discharge to/from the battery pack 10 is halted.

The fuse 170 includes an encapsulated portion 170d surrounded by the strap 174 and a free portion 170e not encapsulated by the strap. The cell terminal 66 that is electrically coupled to the fuse 170 is coupled to the free portion 170e of the fuse 170. The strap 174 electrically isolates the encapsulated portion 170d of the fuse 170 from other cell terminals 66 adjacent the second lateral portion 122 (i.e., the right side) of the wall 58. As illustrated in FIG. 6, the strap 174 includes a tab 178. The receptacle 154 of the rib 150 receives the tab 178 of the strap 174 to align the strap 174 with the wall 58. In the illustrated embodiment, the strap 174 includes two tabs 178 which are received by each of the receptacles 154.

As best illustrated in FIG. 7, cell terminals 66 of adjacent cells 14 are connected to one another at an interface 182. The taps 102 are electrically coupled to each of the adjacent cells 14 (e.g., a first cell 14 and a second cell 14) at the same interface 182. The taps 102 pass through the tap holes 158. The taps 102 are soldered to traces 98 within the jacket 106 to be coupled to the circuit board 62. The trace 98 electrically couples the tap 102 to the printed circuit board 62 with the trace 98 being configured to transmit a signal indicative of at least one of a voltage and a current at the interface 182 to the printed circuit board 62. As shown in FIG. 7, the tap 102, a cell terminal 66 of one cell 14, and a cell terminal 66 of another cell 14 are welded to one another at the interface 182. In the illustrated embodiment, the tap 102, a cell terminal 66 of one cell 14, and a cell terminal 66 of another cell 14 are stacked upon one another and laser welded to one another at the interface 182. Multiple traces 98 are present in the jacket 106, with each trace 98 electrically coupling a different interface 182 to the printed circuit board 62. In the illustrated embodiment, the cell terminals 66 are either copper-based or aluminum-based. In the illustrated embodiment, opposing cell terminals 66 at a single interface 182 are copper-based and aluminum-based, respectively. The tap 102 has an encapsulated portion 102a surrounded by the wall 58 and a free portion 102b not encapsulated by the wall 58. The free portion 102b is positioned between the wall 58 and a cell terminal 66 of a first cell 14. The cell terminal 66 of the first cell 14 is positioned between the free portion 102b and a cell terminal 66 of a second cell 14.

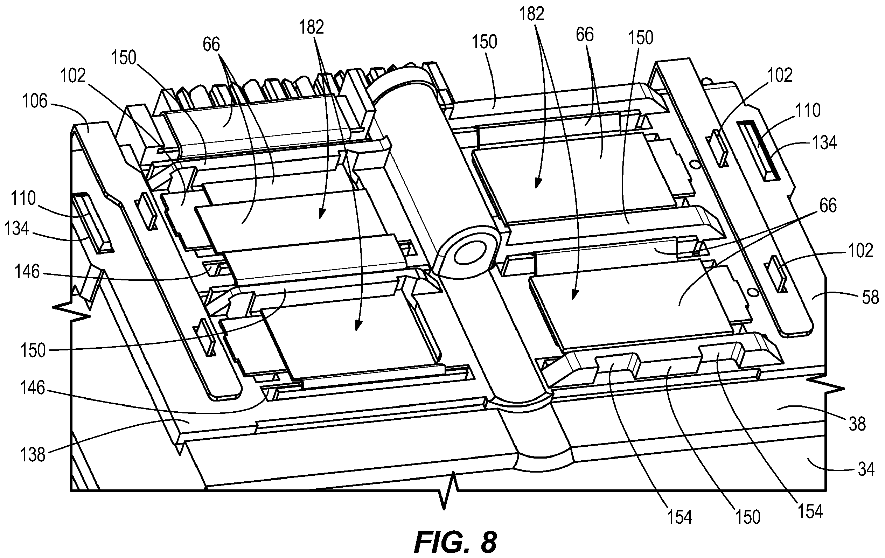

FIGS. 5 and 8 illustrate the ribs 150 of the wall 58 in detail. The ribs 150 are electrically insulative and protrude from the outer surface 138 of the wall 58 to electrically isolate cell terminals 66 of one interface 182 from cell terminals 66 of another interface 182. Presence of the ribs 150 separates the cell terminals 66 prior to securing the position of the cell terminals by welding (e.g., laser welding) of the tabs 102 and two cell terminals 66 at each interface 182. In the illustrated embodiment, the wall 58 is molded (e.g., insert molded), and the ribs 150 are integrally formed with the wall. In other embodiments, ribs may be otherwise secured to the wall 58. As best illustrated in FIGS. 3 and 8, the ribs 150 are positioned between terminal holes 146 corresponding to cell terminals 66 that need to be electrically isolated from one another. In the assembly, the cells 14 are stacked in the stacking direction D1 with opposite polarities cell terminals 66 on either lateral side 118, 122 of the wall 58. The interfaces 182 connect positive cell terminals 66 of one cell 14 to negative cell terminals 66 of another cell 14, and vice-versa. This continues down the stacking direction D1, where the last cell terminal 66 of the battery pack 10 is connected to the free portion 170e of the fuse 170. The fuse 170 is, in turn, connected to the second lead 74 and a corresponding battery terminal 78 such that when the battery pack 10 is coupled to a charger or tool, the battery pack 10 is configured to receive or emit current to or from the charger or tool.

The ribs 150 electrically isolate one cell terminal 66 from two directly electrically coupled cell terminals 66. In the stacking direction, the battery pack 10 includes a first cell 14 having a first cell terminal 66, a second cell 14 having a second cell terminal 66, and a third cell 14 having a third cell terminal 66. Each cell terminal 66 extends through a corresponding and dedicated terminal hole 146 of the wall 58 (e.g., one cell terminal 66 extends through one terminal hole 146). The rib 150 protrudes from the wall 58 to inhibit contact and thus electrical short circuiting between the third cell terminal 66 and either one of the first cell terminal 66 and the second cell terminal 66. The rib 150 electrically isolates the third cell terminal 66 from the first cell terminal 66 and the second cell terminal 66..

Although the disclosure has been described in detail with reference to certain preferred embodiments, variations and modifications exist within the scope and spirit of one or more independent aspects of the disclosure as described. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A battery pack comprising:
   a control circuit board;
   a first cell having a first terminal electrically coupled to the control circuit board;
   a second cell electrically coupled to the first cell and having a second terminal;
   a fuse electrically coupling the second terminal to the control circuit board, the fuse being positioned between the second terminal and the control circuit board;
   an electrically insulative strap molded to the fuse, the strap electrically isolates the fuse from the first cell.
2. The battery pack of clause 1, wherein the fuse has a cell-side portion having a first width, a board-side portion having a second width, and a central portion between the cell-side portion and the board-side portion having a third width smaller than the first width and the second width.
3. The battery pack of clause 1, wherein the fuse has an encapsulated portion surrounded by the strap and a free portion not encapsulated by the strap.
4. The battery pack of clause 3, wherein the second terminal is coupled to the fuse at the free portion.
5. The battery pack of clause 3, wherein the fuse has a cell-side portion, a board-side portion, and a central portion between the cell-side portion and the board-side portion, the central portion being part of the free portion of the fuse spaced from the strap.
6. The battery pack of clause 1, further comprising a core box having a wall with a receptacle, the receptacle receiving a tab of the strap to align the strap with the wall.
7. The battery pack of clause 1, further comprising a third cell with a third terminal, the third cell being electrically coupled with the first cell and the second cell, the third terminal being electrically isolated from the second terminal by the strap.
8. A battery pack comprising:
   a control circuit board;
   a cell electrically coupled to the control circuit board and having a first terminal;
   another cell having a second terminal electrically coupled to the first terminal at an interface;
   a tap electrically coupled to the first terminal and the second terminal at the interface;
   an electrically insulative wall molded to the tap, the wall secures the position of the tap; and
   a trace electrically coupling the tap to the control circuit board, the trace being configured to transmit a signal indicative of at least one of a voltage and a current at the interface to the control circuit board.
9. The battery pack of clause 8, wherein the tap, first terminal, and second terminal are welded to one another at the interface.
10. The battery pack of clause 9, wherein the tap is soldered to the trace.
11. The battery pack of clause 8, further comprising yet another cell having a yet another terminal, a further cell having a further terminal, and a another tap electrically coupled to the yet another terminal and the further terminal at a second interface, the second tap being electrically coupled to the second trace, both the trace and the second trace being provided within a jacket.
12. The battery pack of clause 8, wherein at least one of the first terminal and the second terminal is either copper-based or aluminum-based.
13. The battery pack of clause 12, wherein the first terminal is copper-based, and the second terminal is aluminum-based.
14. The battery pack of clause 8, wherein the tap has an encapsulated portion surrounded by the wall and a free portion not encapsulated by the wall, the free portion is positioned between the wall and the first terminal, and the first terminal is positioned between the tap and the second terminal.
15. A battery pack comprising:
   a first cell having a first terminal;
   a second cell having a second terminal directly electrically coupled to the first cell at an interface;
   a third cell having a third terminal;
   a core box receiving the first cell, the second cell, and the third cell therein;
   a wall coupled to the core box, the wall comprising:
      a first terminal hole through which the first terminal extends,
      a second terminal hole through which the second terminal extends,
      a third terminal hole through which the third terminal extends, and
      an electrically insulative rib protruding from the wall to inhibit contact and thus electrical short circuiting between the third terminal and either of the first terminal and the second terminal, the rib electrically isolates the third terminal from the first terminal and the second terminal.
16. The battery pack of clause 15, wherein the wall is generally planar and has a first thickness.
17. The battery pack of clause 16, wherein the rib has a second thickness greater than the first thickness.
18. The battery pack of clause 15, wherein the second cell has an auxiliary second cell terminal, the third cell has an auxiliary third cell terminal, and the third terminal is indirectly coupled to the first cell and the second cell through an auxiliary interface between the auxiliary second cell terminal and the auxiliary third cell terminal.
19. The battery pack of clause 15, wherein the wall is molded, and the rib is integrally formed with the wall.
20. The battery pack of clause 15, wherein the rib is positioned between the first terminal hole and the second terminal hole.

## Claims

1. A battery pack comprising:
a control circuit board;
a first cell having a first terminal electrically coupled to the control circuit board;
a second cell electrically coupled to the first cell and having a second terminal;
a fuse electrically coupling the second terminal to the control circuit board, the fuse being positioned between the second terminal and the control circuit board;
an electrically insulative strap molded to the fuse, the strap electrically isolates the fuse from the first cell.

2. The battery pack of claim 1, wherein the fuse has a cell-side portion having a first width, a board-side portion having a second width, and a central portion between the cell-side portion and the board-side portion having a third width smaller than the first width and the second width.

3. The battery pack of claim 1, wherein the fuse has an encapsulated portion surrounded by the strap and a free portion not encapsulated by the strap, preferably wherein the second terminal is coupled to the fuse at the free portion.

4. The battery pack of claim 3, wherein the fuse has a cell-side portion, a board-side portion, and a central portion between the cell-side portion and the board-side portion, the central portion being part of the free portion of the fuse spaced from the strap.

5. The battery pack of any preceding claim, further comprising a core box having a wall with a receptacle, the receptacle receiving a tab of the strap to align the strap with the wall.

6. The battery pack of any preceding claim, further comprising a third cell with a third terminal, the third cell being electrically coupled with the first cell and the second cell, the third terminal being electrically isolated from the second terminal by the strap.

7. A battery pack comprising:
a control circuit board;
a cell electrically coupled to the control circuit board and having a first terminal;
another cell having a second terminal electrically coupled to the first terminal at an interface;
a tap electrically coupled to the first terminal and the second terminal at the interface;
an electrically insulative wall molded to the tap, the wall secures the position of the tap; and
a trace electrically coupling the tap to the control circuit board, the trace being configured to transmit a signal indicative of at least one of a voltage and a current at the interface to the control circuit board.

8. The battery pack of claim 7, wherein the tap, first terminal, and second terminal are welded to one another at the interface, preferably wherein the tap is soldered to the trace.

9. The battery pack of claim 7 or 8, further comprising yet another cell having a yet another terminal, a further cell having a further terminal, and a another tap electrically coupled to the yet another terminal and the further terminal at a second interface, the second tap being electrically coupled to the second trace, both the trace and the second trace being provided within a jacket, and/or wherein at least one of the first terminal and the second terminal is either copper-based or aluminum-based.

10. The battery pack of claim 9, wherein the first terminal is copper-based, and the second terminal is aluminum-based.

11. The battery pack of any one of claims 7 to 10, wherein the tap has an encapsulated portion surrounded by the wall and a free portion not encapsulated by the wall, the free portion is positioned between the wall and the first terminal, and the first terminal is positioned between the tap and the second terminal.

12. A battery pack comprising:
a first cell having a first terminal;
a second cell having a second terminal directly electrically coupled to the first cell at an interface;
a third cell having a third terminal;
a core box receiving the first cell, the second cell, and the third cell therein;
a wall coupled to the core box, the wall comprising:
a first terminal hole through which the first terminal extends,
a second terminal hole through which the second terminal extends,
a third terminal hole through which the third terminal extends, and
an electrically insulative rib protruding from the wall to inhibit contact and thus electrical short circuiting between the third terminal and either of the first terminal and the second terminal, the rib electrically isolates the third terminal from the first terminal and the second terminal.

13. The battery pack of claim 12, wherein the wall is generally planar and has a first thickness, preferably wherein the rib has a second thickness greater than the first thickness.

14. The battery pack of claim 12 or 13, wherein the second cell has an auxiliary second cell terminal, the third cell has an auxiliary third cell terminal, and the third terminal is indirectly coupled to the first cell and the second cell through an auxiliary interface between the auxiliary second cell terminal and the auxiliary third cell terminal.

15. The battery pack of claim 12, 13 or 14, wherein the wall is molded, and the rib is integrally formed with the wall, and/or wherein the rib is positioned between the first terminal hole and the second terminal hole.
